# EUROPEAN PATENT SPECIFICATION

(11) **EP 2 416 989 B1**
(45) Date of publication and mention of the grant of the patent: **05.06.2013**
(21) Application number: 10714745.6
(22) Date of filing: 08.04.2010
(51) Int. Cl.: B60R 13/02, B60R 21/213, B60R 21/215

(54) **TRIM PANEL FOR A VEHICLE**
KRAFTFAHRZEUG-INNENVERKLEIDUNG
PANNEAU INTERIEUR D'UN VÉHICULE

(30) Priority: 09.04.2009 US 168126 P
(43) Date of publication of application: 15.02.2012
(73) Proprietor: Johnson Controls Technology Company, Holland, MI 49423 (US)
(72) Inventor: SAPAK, Ben, E., West Olive MI 49460 (US); KRING, Christopher, Zeeland MI 49464 (US)
(74) Representative: Wolff, Felix
(86) International application number: PCT/US2010/030369
(87) International publication number: WO 2010/118217

(56) References cited:
- EP-A2- 0 736 422
- EP-A2- 1 892 159
- US-A1- 2005 269 804
- US-A1- 2007 241 542
- US-A1- 2008 197 609

## Description

### BACKGROUND

### 1. Field of the Invention

This invention relates generally to a structural element that is provided on the backside or B-surface of a motor vehicle trim panel.

### 2. Related Art

Trim panels are typically used in the occupant compartment of a motor vehicle to cover the metal frame (which is referred to as the body in white, or BIW) of the vehicle. For example, garnish trim panels are used to cover the A, B, C and/or D pillars that extend between the vehicle' body and its roof. Conventionally, the garnish trim panels are formed by injection molding a plastic material. In less expensive vehicles, the show or A-surface of the injection-molded garnish trim panel is painted and/or provided with a grain pattern. In more expensive vehicles, the show or A-surface is formed by providing a fabric covering on the injection-molded garnish trim panel. The injection-molded portion of the garnish trim panel provides the desired stiffness and rigidity to the garnish trim panel, provides attachment structures that allow the garnish trim panel to be attached to the underlying metal pillar, provides energy-absorbing structures for impact protection and/or provides locations where acoustic materials can be provided to reduce sound from entering the occupant compartment from the vehicle body.
US 2008/197609 discloses a trim panel according to the preamble of claim 1.

### SUMMARY

However, injection-molded garnish trim panels also have a number of disadvantages. Because they are typically formed of plastic material that is rigid at room temperatures, BSR (buzz, squeak, rattle) noise can occur when vibration or contact occurs between the metal pillar and the rigid injection-molded garnish trim panel. To prevent this BSR noise, the injection-molded garnish trim panel may be tightly connected to the vehicle's pillar and/or a layer of material, such as felt, is attached to the injection-molded garnish trim panel at locations where BSR noise could occur.

For aesthetic reasons, the injection-molded garnish trim panels also typically extend over the edge of the headliner where the top edges of the injection-molded garnish trim panels meet the lower edge of the headliner. However, in vehicles with roof-mounted side air bags, it is typically necessary for the headliner to separate from the injection-molded garnish trim panels to allow the roof-mounted side air bags to deploy. Due to the force at which air bags deploy and the rigidity of injection-molded garnish trim panels, this can often cause the injection-molded garnish trim panels to detach from the vehicle's pillars if conventional low-force fasteners, such as bird-beak fasteners, are used to attach the injection-molded garnish trim panel to the pillar.

Moreover, it should be appreciated that the plastic materials used to form the injection-molded garnish trim panels become brittle at low temperatures. Thus, if the roof-mounted side air bags deploy when the temperature of the vehicle, and thus an injection-molded garnish trim panel, is low, as might occur during winter, the injection-molded garnish trim panel, rather than merely detaching from the pillar, may shatter as well. To prevent this from occurring, conventional injection-molded garnish trim panel are often bolted to the pillar, and a fabric backing material is provided at the top edge of the injection-molded garnish trim panel to secure any portions of the injection-molded garnish trim panels that might break away as the roof-mounted side air bags deploy. Because this bolt must be installed from the A-surface side of the roof-mounted side air bags deploy, a covering badge, button or the like is typically required. Of course, adding the fabric backing, the cover, the attachment structure for the bolt adds cost and weight to the injection-molded garnish trim panel, and requires more labor to make and to install injection-molded garnish trim panel.

Therefore, it would be advantageous to provide a trim panel that does not use an injection-molded portion. It would separately be advantageous to provide a fabric-covered trim panel that is lighter, less expensive to produce, less expensive to install and/or that reduces or avoids one or more of the disadvantages of an injection-molded material. It would separately be advantageous to accomplish one of more of these advantages without sacrificing one or more of the advantages of an injection-molded material.
The above objects achieved by the features of claims 1.

This invention relates to a trim panel comprising a flexible first element providing a show or A surface and a second flexible element provided behind and attached to the first element and providing attachment structures usable to attach the trim panel to a vehicle body.

This invention also relates to a trim panel comprising a first compression-formed element providing a show or A surface and a second compression-formed element provided behind and attached to the first element and providing attachment structures usable to attach the trim panel to a vehicle body.

This invention also relates to a trim panel comprising a flexible first element providing a show or A surface and a second flexible element provided behind and attached to the first element and that is usable to absorbs sound emitted from a vehicle body towards an occupant compartment of the vehicle.

This invention also relates to a trim panel comprising a flexible first element providing a show or A surface and a second flexible element provided behind and attached to the first element and that is usable to absorb energy due to an impact between a vehicle body and occupant of the vehicle.

This invention also relates to a trim panel comprising a flexible first element providing a show or A surface and a second flexible element provided behind and attached to the first element and that allows a roof-mounted air bag to deploy without detaching or breaking apart the trim panel.

These and other features and advantages of various embodiments of systems according to this invention are described in, or are apparent from, the following detailed descriptions of various exemplary embodiments of various devices, according to this invention.

### BRIEF DESCRIPTION OF THE DRAWINGS

Various exemplary embodiments of trim panels according to this disclosure will be described in detail, with reference to the following figures, wherein:

Fig. 1 is a perspective view of an interior of a vehicle, including the vehicle's A pillar, a garnish trim panel, an instrument panel and a headliner;

Fig. 2 is a perspective view of the B surface of a conventional garnish trim panel;

Fig. 3 is a perspective view of the back side of one exemplary embodiment of a garnish trim panel according to this invention;

Fig. 4 is a side plan view of one exemplary embodiment of an A-surface portion of a garnish trim panel according to this invention;

Fig. 5 is a perspective view of one exemplary embodiment of a garnish trim panel according to this invention;

Fig. 6 is a perspective view of a top portion of the garnish trim panel of Fig. 5; and

Fig. 7 is a perspective view of a bottom portion of the garnish trim panel of Fig. 5.

### DETAILED DESCRIPTION OF EXEMPLARY EMBODIMENTS

This invention relates to trim panels for vehicle interiors. More particularly, this invention relates to trim panels that have a flexible first element providing a show or A surface and a second flexible element provided behind and attached to the first element. The second flexible element can provide attachment structures usable to attach the trim panel to a vehicle body, can be usable to absorbs sound emitted from a vehicle body towards an occupant compartment of the vehicle, or sounds occuring within the occupant compartment from reflecting from the trim panel, can be usable to absorb energy due to an impact between a vehicle body an occupant of the vehicle, and/or can allow a roof-mounted air bag to deploy without detaching or breaking apart the trim panel. The flexible second element can be a compression-formed element provided behind, and attached to, the first element and providing attachment structures usable to attach the trim panel to a vehicle body.

For purposes of this disclosure, a trim panel is a covering usable to cover any interior surface or component. Such trim panels may be formed by compression molding. Trim panels may include, but are not limited to, garnish trim panels, headliners, door panels and the like. Although the following disclosure focuses on garnish trim panels, features according to this invention may be incorporated into any other known or later-developed trim panel.

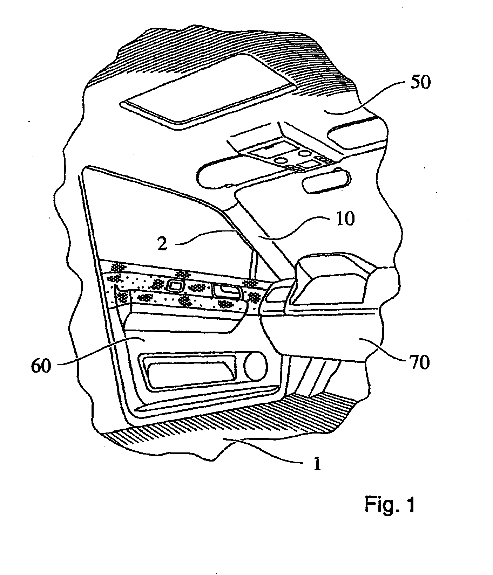

Fig. 1 shows a vehicle interior with various interior trim pieces or panels including a conventional garnish trim panel 10 attached to an A pillar 2 of the vehicle 1, a headliner 50, a door panel 60 and an instrument panel 70. The conventional trim panels include rigid substrates formed using an injection-moldable material such as, for example, a polymer (e.g., polyurethane, polypropylene, etc.), a composite such as a fiberglass-reinforced polymer, or any other material known in the art. A cover material such as a textile (e.g., a woven fabric, a knit fabric, etc.), leather, a polymer material (e.g., vinyl, thermoplastic polyurethane (TPU), thermoplastic olefin (TPO), polyvinyl chloride (PVC), etc.), or any other suitable cover material, may be provided over the substrate. A compressible layer formed from a material such as a close-cell foam may be provided between the cover material and the substrate.

As discussed above, trim panels are typically used in the occupant compartment of a motor vehicle to cover the metal frame of the vehicle. For example, garnish trim panels are used to cover the A pillar 2, as shown in Fig. 1, as well as the B, C and/or D pillars (depending on the type of vehicle) that also extend between the vehicle' body and its roof. Conventionally, the garnish trim panels are formed by injection molding a plastic material. In less expensive vehicles, the show or A-surface of the injection-molded garnish trim panel is painted and/or provided with a grain pattern. In more expensive vehicles, the show or A-surface is formed by providing a fabric covering on the injection-molded garnish trim panel. The injection-molded portion of the garnish trim panel provides the desired stiffness and rigidity to the garnish trim panel, provides attachment structures that allow the garnish trim panel to be attached to the underlying metal pillar, provides energy-absorbing structures for impact protection and/or provides locations where acoustic materials can be provided to reduce sound from entering the occupant compartment from the vehicle body.

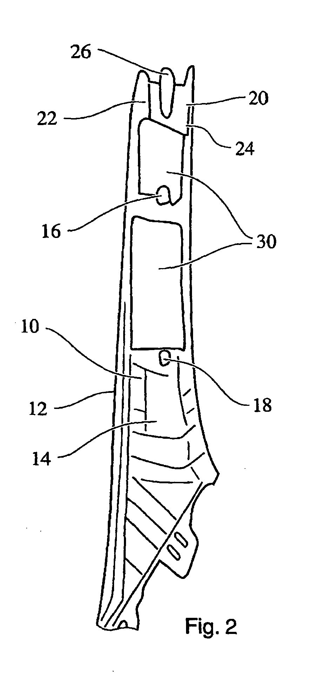

Fig. 2 is a perspective view showing a conventional garnish trim panel 10 from the back, non-show, or B, side. In particular, the conventional garnish trim panel 10 shown in Fig. 2 is usable to cover the A pillar 2 of the vehicle 1 shown in Fig. 1. As shown in Fig. 2, the conventional garnish trim panel 10 includes a fabric covering 12 and an injection-molded substrate 14. Typically, the conventional garnish trim panel 10 is formed by placing the fabric covering 12 into a mold and injecting molten plastic into the mold behind the fabric covering 12 to form the injection-molded substrate 14. That is, the front side of the fabric covering 12 forms the show or A surface of the conventional garnish trim panel 10, while the back side of the injection-molded substrate 14 forms the non-show or B surface of the conventional garnish trim panel 10. This B surface of the conventional garnish trim panel 10 faces the metal A pillar 2.

As shown in Fig. 2, a number of attachment structures 16, commonly referred to as doghouses in the art, are formed on the B surface of the injection-molded substrate 14. Each of these attachment structures 16 permits a low-force fastener 18 to be installed into or onto that attachment structure 16. In the conventional garnish trim panel 10 shown in Fig. 2, fasteners 18 that are commonly called bird-beak fasteners are provided on the attachment structures 16. These bird-beak fasteners 18 are inserted into corresponding holes formed in the A pillar 2 to hold the B surfaces of the conventional garnish trim panel 10 securely against the A pillar 2. However, these bird-beak fasteners 18 also allow the conventional garnish trim panel 10 to be readily detached from the A pillar 2.

As further shown in Fig. 2, a top portion 20 of the conventional garnish trim panel 10 includes a number of second attachment structures 22, a fabric layer 24 and a securing bolt 26. As discussed above, because the plastic material that is typically used to formed the injection-molded substrate 14 of the conventional garnish trim panel 10 is rigid at room temperatures, BSR (buzz, squeak, rattle) noise can occur when vibration or contact occurs between the metal A pillar 2 and the rigid injection-molded substrate 14. To prevent this BSR noise, the conventional garnish trim panel 10 may be tightly connected to the A pillar 2 and/or the fabric layer 24, which can be any appropriate material, such as felt, can be provided on the injection-molded substrate 14 at locations where BSR noise could occur.

As discussed above, for aesthetic reasons, garnish trim panels also typically extend over the edge of the headliner 50. In particular, the top portion 20 of the conventional garnish trim panel 10, including both the fabric covering 12 and the injection-molded substrate 14, extends over the lower edge of the headliner 50. However, in vehicles with roof-mounted side air bags, it is typically necessary for the headliner 50 to be able to separate from the injection-molded substrate 14 to allow the roof-mounted side air bag to deploy. Due to the force at which air bags deploy and the rigidity of the injection-molded substrate 14, this would typically cause at least the top portion 20 of the conventional garnish trim panel 10 to detach from the A pillar 2 if the conventional low-force bird-beak fastener 15 were used to attach the top portion 20 of the conventional garnish trim panel 10 to the A pillar 2.

To prevent this from occurring, the second attachment structures 22 and the bolts 26 of the conventional garnish trim panel 10 are used to securely bolt the top portion 20 of the conventional garnish trim panel 10 to the A pillar 2. Because the bolt 26 must be installed from the A-surface side of the conventional garnish trim panel 10, it is necessary to have a through-hole in the fabric covering 12 as well. To avoid having the end of the bolt 26 exposed to the occupants, a covering badge, button or the like is typically placed into the second attachment structure 22 from the A-surface side of the conventional garnish trim panel 10.

Moreover, it should be appreciated that the plastic materials used to form the injection-molded substrate 14 of the conventional garnish trim panel 10 becomes brittle at low temperatures. Thus, if the roof-mounted side air bags deploy when the temperature of the vehicle, and thus the injection-molded substrate 14, is low, as might occur during winter, the injection-molded substrate 14, rather than merely detaching from the A pillar 2 if a bird beak fastener 18 is used to secure the top portion 20, may shatter. This is especially likely to happen if the top portion 20 is secured by the bolt 26, as the top portion 20 must still deflect enough to allow the headliner 50 to come out from behind the conventional garnish trim panel 10. To prevent this from occurring, the conventional garnish trim panel 10 makes use of the fabric layer 24 to securely retain any pieces of the top portion 20 of the injection-molded substrate 14 that may break away. Of course, adding the fabric layer 24, the cover button or badge, the second attachment structures 22 and the bolt 26 adds cost and weight to the conventional garnish trim panel 10, and requires more labor to make and to install the conventional garnish trim panel 10.

It should also be appreciated that, as shown in Fig. 2, the conventional garnish trim panel 10 also needs to be provided with one or more acoustic absorbing layers 30. These acoustic absorbing layers 30 are placed on the injection-molded substrate 14 at locations that face holes in the A pillar 2. These holes are used when assembling the vehicle body, including the A pillar 2. However, after the vehicle body is assembled, these holes provide outlets for objectionable noise to enter the occupant compartment. The acoustic absorbing layers 30 are used to deaden this noise as much as possible before it can enter the occupant compartment.

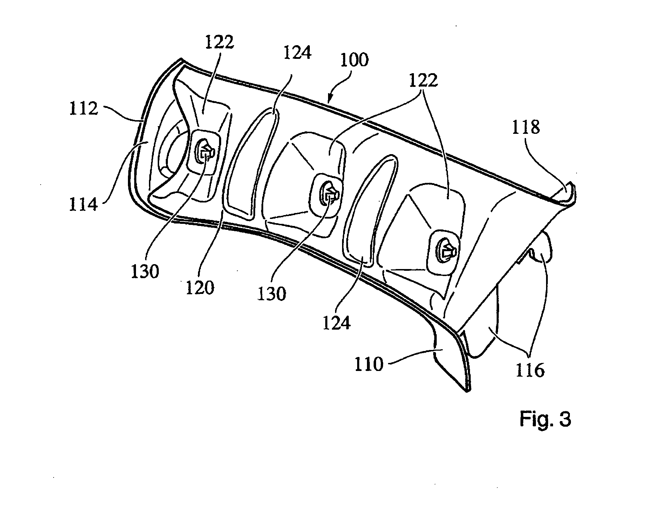

Figs. 3-7 illustrate various exemplary embodiments of a garnish trim panel 100 according to this invention. As shown in Fig. 3, the garnish trim panel 100 includes a cover element 110 and an attachment element 120. The cover element 110 has a first or outer surface 112 that provides the show or A-surface for the garnish trim panel 100 and a second or inner surface 114 that is securely attached to the attachment element 120. Because this garnish trim panel 100 is designed for the A pillar 2, the cover element 110 also includes a number of tabs 116 that secure the bottom portion of the garnish trim panel 100 to the instrument panel 70. A flared portion 118 of at least the cover element 110 rests against the instrument panel 70 to provide a finished appearance.

As further shown in Fig. 3, the attachment element 120 has a number of attachment structures 122 that extend away from the cover element 110 toward the A pillar 2 and a number of stiffening ribs 124 that extend laterally across the width of the garnish trim panel 100. In the exemplary embodiment shown in Fig. 3, a bird's beak fastener 130 is placed into a keyhole (not shown) in the top of each attachment structure 122. The bird's beak fastener 130 extends into and engages a corresponding hole in the A pillar 2 to secure the garnish trim panel 100 to the A pillar 2.

It should be appreciated that either or both of the cover element 110 and the attachment element 120 can be formed by compression forming a compression-formable thermoplastic or thermosetting substrate. In various exemplary embodiments, both of the cover element 110 and the attachment element 120 are formed by compression forming. It should be appreciated that the cover element 110 and the attachment element 120 can be formed using the same compression-formable material. Alternatively, the cover element 110 and the attachment element 120 can be formed using two different compression-formable materials. It should also be appreciated that, even if the cover element 110 and the attachment element 120 are formed using the same compression-formable material, the cover element 110 and the attachment element 120 need to undergo different amount of compression. For example, the cover element 110 and the attachment element 120 can be formed from the same sheet of compression-formable material.

In particular, many compression-formable materials, such as those commonly used when compression-forming headliners, become relatively less stiff, i.e., more flexible, the more they are compressed. At the same time, those materials generally become tougher the more they are compressed. Thus, according to the invention , the cover element 110 is compressed to a greater degree than the attachment element 120. As a result, the cover element 110 is relatively tougher than the attachment element 120, while the attachment element 120 is relatively stiffer than the cover element 110. Similarly, the cover element 110 and the attachment element 120, when made using two different compression-formable materials, can be made using two different area-weight versions of the same material, two different thickness versions of the same material and/or the like.

As indicated above, to complete the garnish trim panel 100 according to this invention, the cover element 110 and the attachment element 120 are securely attached to each other. In various exemplary embodiments, the cover element 110 and the attachment element 120 are formed as separate pieces in the same or in different sheets of compression-formable material. Each of the cover element 110 and the attachment element 120 are removed from the corresponding sheet(s) of compression-formable material using any appropriate known or later-developed technique, such as, for example, water-jetting. Alternatively, one or more edges of one or both of the cover element 110 and the attachment element 120 can be severed from the corresponding sheet of compression-formable material using the pinch seal technique disclosed in International Application PCT/US2008/085020. For example, a pinch-sealed edge can be provided on an exposed edge of the cover element 110, such as the edge adjacent to the windshield of the vehicle. It should also be appreciated that the pinch seal technique can also be applied to any edge in the interior of the cover element 110, such as a cut-out opening for a mating part, such as a seat belt adjuster.

It should further be appreciated that, if the cover element 110 and the attachment element 120 are formed from the same sheet of compression-formable material, they can be formed as a single piece, with a living hinge formed between the cover element 110 and the attachment element 120. The cover element 110 and the attachment element 120 can then be rotated towards each other around the living hinge so that their free edges are placed adjacent to each other. It should be appreciated that the living hinge can be formed using any appropriate known or later-developed technique, such as, for example, any one of the techniques disclosed in U.S. Provisional Patent Application 60/935,413, it should be appreciated that having the cover element 110 and the attachment element 120 joined at the living hinge tends to make aligning the two parts easier, and thus reduces the time and cost for assembling the cover element 110 and the attachment element 120.

It should be appreciated that, regardless of whether the cover element 110 and the attachment element 120 are formed as separate pieces or as a single piece joined at a living hinge, any appropriate known or later-developed technique or material can be used to connect the cover element 110 to the attachment element 120. For example, the cover element 110 and the attachment element 120 could be attached using an adhesive, such as, for example, hot melt glue and/or a thermally activated adhesive film. Alternatively, the cover element 110 and the attachment element 120 could be attached by physically melding them together, such as, for example, by using sonic welding or the like. Additionally, the cover element 110 and the attachment element 120 could be mechanically connected, such as, for example, by using heat stakes or the like.

As discussed above, the garnish trim panel 100 provides additional sound absorption, beyond the amount of sound absorption that can be provided by the acoustic absorbing layers 30 in the conventional garnish trim panel 10. That is, when the garnish trim panel 100 is formed using compression-formable materials, those materials typically provide substantial acoustic absorption. In addition, in contrast to the acoustic absorbing layers 30 in the conventional garnish trim panel 10, which are provided only over a limited portion of the surface of the conventional garnish trim panel 10, both of the cover element 110 and the attachment element 120 absorb sound over their entire lengths.

It should also be appreciated that the cover element 110 and the attachment element 120 not only absorb sound emanating toward the occupant compartment from the A pillar 2, they also absorb sound that occurs within the occupant compartment. In contrast, in the conventional garnish trim panel 10, the injection-molded substrate 14 tends to reflect any sounds that occur within the occupant compartment back into the occupant compartment. Furthermore, the space between the cover element 110 and the attachment element 120 provides a dead space that is capable of trapping sound energy so that it does not radiate from this dead space back into the occupant compartment.

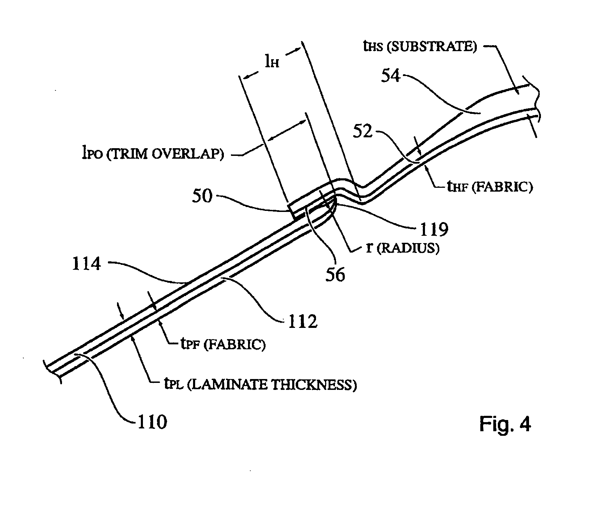

Fig. 4 shows a side plan view of the top portion of the cover element 110 where it interfaces with the headliner 50. The headliner 50 typically comprises a coverstock or fabric portion 52 and a substrate portion 54. The fabric portion 52 has a thickness tHF and is typically a multilayer laminate, but can be a single layer. Likewise, the substrate portion 54 is also typically a multilayer laminate and has a thickness tHS. As shown in Fig. 4, the cover element 110 has an overall thickness of tPL, with a fabric cover thickness of tPF. As outlined above with respect to the conventional garnish trim panel 10, the headliner 50 is formed to provide an overlapped portion 56 having a length IH that will extend under the cover element 110 by a distance IO. As indicated above, in various exemplary embodiments, one or more of the free edges of the cover element 110, and possibly one or more edges of the attachment element 120, can be formed using the pinch seal technique disclosed in the incorporated 020 International Application. As shown in Fig. 4, it should be appreciated that this pinch seal technique is particularly useful at this interface with the headliner 50. In the exemplary embodiment of the cover element 110 shown in Fig. 4, the top edge 119 of the cover element 110 is provided with a pinch seal, creating a very aesthetically pleasing finish to the cover element 110 where it overlaps the headliner 50.

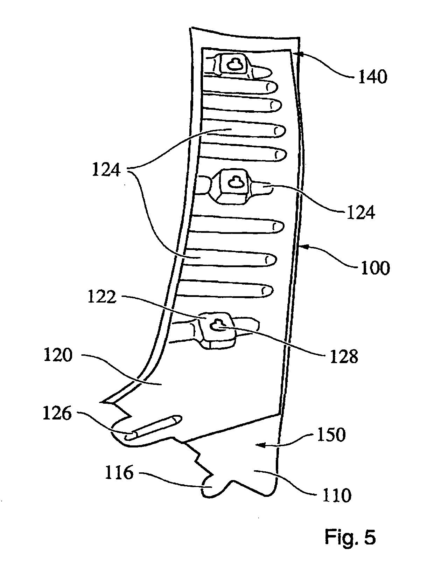

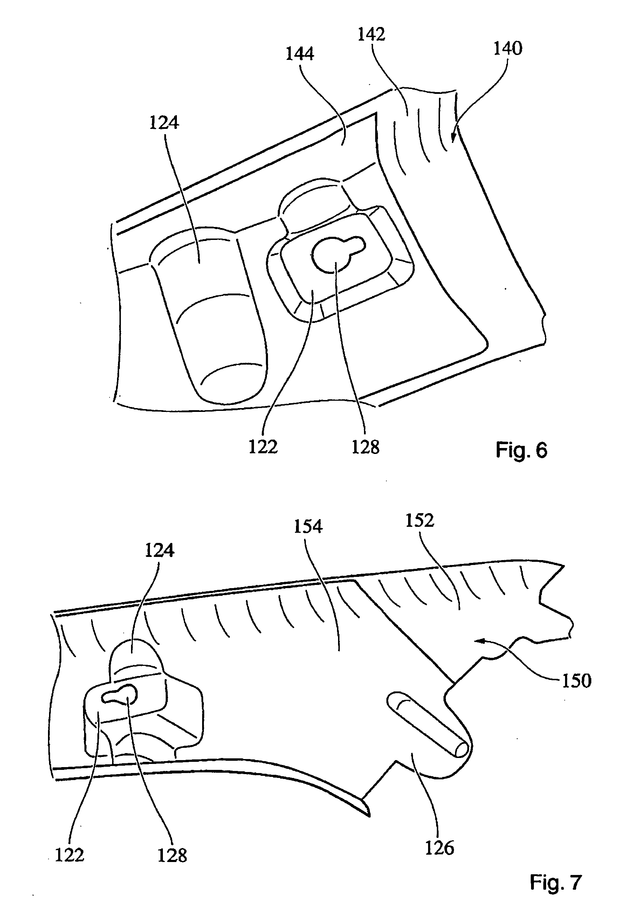

While the attachment element 120 is not shown in Fig. 4, it should be appreciated that it can either stop short of the portion of cover element 110 that overlaps the headliner, as shown in Figs. 5 and 6, or can extend past the edge of the cover element 110. In this case, the overlapped portion 56 of the headliner 50 would extend between the cover element 110 and the attachment element 120. This tends to bias the overlapped portion 56 of the headliner 50 towards the cover element 110, such that the edge 119 of the cover element 110 bears against the fabric portion 52 of the headliner 50, creating an aesthetically pleasing appearance.

Figs. 5-7 show another exemplary embodiment of a garnish trim panel according to this invention. In particular, Fig. 5 is a perspective view of one exemplary embodiment of a garnish trim panel according to this invention, Fig. 6 is a perspective view of a top portion of the garnish trim panel of Fig. 5; and Fig. 7 is a perspective view of a bottom portion of the garnish trim panel of Fig. 5. In this exemplary embodiment, the garnish trim panel 100 has a top portion 140 and a bottom portion 150 that each provides advantages to the garnish trim panel 100.

As shown in Figs. 2 and 5-7, the attachment structures 122 can take a variety of different shapes. Likewise, as shown in Figs. 2 and 5-7, the stiffening ribs 124 can also take a variety of different shapes. Moreover, as shown in Figs. 5-7, an attachment structure 122 can sit on top of a stiffening rib 124. Figs. 5-7 also show one exemplary embodiment of the key hole 128 formed at the top of the attachment structure into which the bird's beak fastener 130 can be inserted. It should be appreciated that the shape of the attachment structures 122, the stiffening ribs 124 and other structures that can be provided in the attachment element 120 can be optimized to provide energy absorption and/or to provide stiffness to the attachment element 120.

Figs. 5 and 6 show one exemplary embodiment of the top portion 140. In particular, Fig. 6 shows the top portion 140 in greater detail. As shown in Figs. 5 and 6, the top portion 140 includes a top portion 142 of the cover element 110 and a top portion 144 of the attachment element 120. In particular, the top portion 142 extends beyond the top portion 144. As outlined above with respect to Fig. 4, the overlapped portion 56 of the headliner 50 extends beneath the top portion 142, while it stops short of the top portion 144. This is especially useful when a roof-mounted side air bag that is located behind the headliner 50 deploys. When the air bag deploys, the overlapped portion 56 of the headliner 50 pushes against the top portion 142. Due to the flexibility of the cover element 110, when the overlapped portion 56 pushes against the top portion 142, it simply bends out of the way as the air bag drives the headliner 50 away from the vehicle's body. In addition, due to the toughness of the compression-formed cover element 110, the top portion 142 does not break, tear or otherwise separate from the remainder of the cover element 110.

Moreover, because the top portion 144 of the attachment element ends short of the overlapped portion 56, and because it is not made of a rigid, injection-molded plastic material, there is no danger of the attachment element breaking or tearing. As a result, the bolt 26 used to secure the conventional injection-molded garnish trim panel 10, the heavy second attachment structures 22 and the fabric layer 24 can be omitted. At the same time, because the attachment element 120 itself is relatively soft and flexible, the fabric layer 24 is not need to prevent any BSR noise.

Figs. 5 and 7 show one exemplary embodiment of the bottom portion 150. In particular, Fig. 7 shows the bottom portion 150 in greater detail. As shown in Figs. 5 and 7, the bottom portion 150 includes a bottom portion 152 of the cover element 110 and a bottom portion 154 of the attachment element 120. In particular, some of the bottom portion 152 extends beyond the bottom portion 154, while the bottom portions 152 and 154 each have a tab 116 and 126, respectively. As outlined above with respect to Fig. 4, the tabs 116 and 126 allow the bottom of the garnish trim panel 100 to be securely connected to the instrument panel 70. The tabs can also act like spring fingers, pre-loading the garnish trim panel 100 against the instrument panel, again creating an aesthetically pleasing appearance.

For garnish trim panels according to this invention that are adjacent to another garnish trim panel or to another type of trim panel, the bottom portion 154 can be formed so that it too extends beyond the bottom portion 152. Like the headliner 50 relative to the top portion 140, the adjacent trim panel will be overlapped by, and will extend between, the bottom portions 152 and 154, thus pre-loading the bottom portion 152 of the cover element 110 against that trim panel, creating an aesthetically pleasing appearance.

While the conventional injection-molded garnish trim panel 10 shown in Fig. 1 does not include them, conventional injection-molded garnish trim panels often include head impact countermeasures (HICs). The HICs can be separate members that are attached to the inside surface of the injection-molded substrate 14 of the conventional injection-molded garnish trim panel 10, can be standing ribs and/or the like formed on the inside surface of the injection-molded substrate 14 of the conventional injection-molded garnish trim panel 10, and/or can be convoluted shapes molded into the conventional injection-molded garnish trim panel 10. Regardless of how the HICs are provided on the conventional injection-molded garnish trim panel 10, they work by absorbing energy as they deform during an impact. In the various exemplary embodiments of the garnish trim panel 100 shown in Figs. 3-7, the stiffening ribs 124 can also act as HICs, as they can absorb energy as the deform during an impact.

In various exemplary embodiments, the pinch-sealed edge may be formed on less than all edges of the finished trim panel. For example, a garnish may have only one edge that is generally visible after installation. This edge may be pinch-sealed, as described above, while other edges may be formed or cut by other methods (e.g., waterjet cutting or die trimming). Thus, it is not necessary for a trim panel to be formed with a pinch-sealed finish on all edges.

After they are finished, the trim panels are stacked for shipment to a vehicle manufacturing plant. Trim panels using conventional folded edges have roughly double the thickness at the edge compared to the pinch-sealed edges of trim panels. Because of this difference, it is possible to increase the pack density of trim panels reducing the space required compared to conventional folded edge trim panels. This significantly reduces transportation costs associated with supplying the trim panels to a vehicle manufacturing plant.

It should be noted that references to relative positions (e.g., "top" and "bottom", or "upper" and "lower") in this description are merely used to identify various elements as are oriented in the figures. It should be recognized that the orientation of particular components may vary greatly depending on the application in which they are used.

The construction and arrangement of the elements of the trim panels, as shown in the various exemplary embodiments, is illustrative only. Although only a few embodiments have been described in detail in this disclosure, it should be appreciated that many modifications are possible (e.g., variations in sizes, dimensions, structures, shapes and proportions of the various elements, values of parameters, mounting arrangements, use of materials, colors, orientations, etc.) without materially departing from the novel teachings and advantages of the subject matter recited herein. For example, elements shown as integrally formed may be constructed of multiple parts or elements, the position of elements may be reversed or otherwise varied, and the nature or number of discrete elements or positions may be altered or varied. It should be noted that the elements and/or assemblies of the system may be constructed from any of a wide variety of materials that provide sufficient strength or durability, including any of a wide variety of moldable plastic materials in any of a wide variety of colors, textures and combinations, other substitutions, modifications, changes and omissions may be made in the design, operating conditions, and arrangement of the exemplary embodiments.

### List of reference signs:

- 1: vehicle
- 2: pillar
- 10: trim panel
- 12: fabric covering
- 14: injection molded substrate
- 16: attachment structures
- 18: fastener
- 20: top portion
- 22: attachment structure
- 24: fabric layer
- 26: fastening means, bolt
- 30: acoustic absorbing layer
- 50: headliner
- 52: fabric portion
- 54: substrate portion
- 56: overlapped portion
- 60: door panel
- 70: instrumental panel
- 100: trim panel
- 110: cover element
- 112: outer surface
- 114: inner surface
- 116: tab
- 118: flared portion
- 119: edge
- 120: attachment element
- 122: attachment structure
- 124: stiffening rib
- 128: key hole
- 130: fastener
- 140: top portion
- 142: top portion of the cover element
- 144: top portion of the attachment element
- 150: bottom portion
- 152: bottom portion of the cover element
- 154: bottom portion of the attachment element

## Claims

1. Trim panel (100) comprising a cover element (110) and an attachment element (120), being attached to each other, wherein the attachment element (120) comprises an attachment structure (122) to attach the trim panel (100) to a vehicle body (1), **characterized in, that** the attachment element (120) and/or the cover element (110) is a compression formed element, whereas the cover element (110) is compressed to a greater degree than the attachment element (120).

2. Trim panel (100) according to claim 1 , **characterized in, that** the attachment element (120) and/or the cover element (110) is a flexible element.

3. Trim panel (100) according to one of the preceding claims, **characterized in, that** it comprises reinforcement means, acoustic- and/or energy-absorbing-means (110, 124).

4. Trim panel (100) according to one of the preceding claims, **characterized in, that** the attachment element (120) and the cover element (110) are connected by a hinge.

5. Trim panel (104) according to one of the preceding claims, **characterized in, that** the attachment element (120) and the cover element (110) are made from one piece.

6. Trim panel (100) according to one of the preceding claims, **characterized in, that** the attachment element {120) and/or the cover element (110) comprises one or more tabs (116), which are preferably pre-loaded.

7. Trim panel (100) according to one of the preceding claims, **characterized in, that** there is at least partially a space between the attachment element (120) and the cover element (110).

8. Trim panel (100) according to one of the preceding claim, **characterized in, that** its top portion (20) is connected to a headliner (50).

9. Trim panel (100) according one of the preceding claims, **characterized in, that** the cover element (110) deforms under the load of an airbag or an adjacent trim element.

10. Trim panel (100) according to one of the preceding claims, **characterized in, that** the cover element (110) extends over the attachment element (120).

## Patentansprüche

1. Verkleidungsteil (100), welches ein Abdeckelement (110) und ein Befestigungselement (120) aufweist, die aneinander befestigt sind, wobei das Befestigungselement (120) eine Befestigungsstruktur (122) zum Befestigen des Verkleidungsteils (100) an einer Fahrzeugkarosserie (1) aufweist, **dadurch gekennzeichnet, dass** das Befestigungselement (120) und/oder das Abdeckelement (110) ein kompressionsgeformtes Element ist, wobei das Abdeckelement (110) in einem höheren Grad komprimiert ist als das Befestigungselement (120).

2. Verkleidungsteil (100) nach Anspruch 1, **dadurch gekennzeichnet, dass** das Befestigungselement (120) und/oder das Abdeckelement (110) ein flexibles Element ist.

3. Verkleidungsteil (100) nach einem der vorhergehenden Ansprüche, **dadurch gekennzeichnet, dass** es Verstärkungsmittel, schall- und/oder energieabsorbierende Mittel (110, 124) aufweist.

4. Verkleidungsteil (100) nach einem der vorhergehenden Ansprüche, **dadurch gekennzeichnet, dass** das Befestigungselement (120) und das Abdeckelement (110) durch ein Gelenk verbunden sind.

5. Verkleidungsteil (100) nach einem der vorhergehenden Ansprüche, **dadurch gekennzeichnet, dass** das Befestigungselement (120) und das Abdeckelement (110) aus einem Stück hergestellt sind.

6. Verkleidungsteil (100) nach einem der vorhergehenden Ansprüche, **dadurch gekennzeichnet, dass** das Befestigungselement (120) und/oder das Abdeckelement (110) eine oder mehrere Laschen (116) aufweist, welche vorzugsweise vorgespannt sind.

7. Verkleidungsteil (100) nach einem der vorhergehenden Ansprüche, **dadurch gekennzeichnet, dass** wenigstens teilweise ein Zwischenraum zwischen dem Befestigungselement (120) und dem Abdeckelement (110) vorhanden ist.

8. Verkleidungsteil (100) nach einem der vorhergehenden Ansprüche, **dadurch gekennzeichnet, dass** sein oberer Abschnitt (20) mit einem Dachhimmel (50) verbunden ist.

9. Verkleidungsteil (100) nach einem der vorhergehenden Ansprüche, **dadurch gekennzeichnet, dass** sich das Abdeckelement (110) unter der Last eines Airbags oder eines benachbarten Verkleidungselements verformt.

10. Verkleidungsteil (100) nach einem der vorhergehenden Ansprüche, **dadurch gekennzeichnet, dass** sich das Abdeckelement (110) über das Befestigungselement (120) erstreckt.

## Revendications

1. Panneau intérieur (100) comprenant un élément de recouvrement (110) et un élément de fixation (120) qui sont attachés l'un à l'autre, dans lequel l'élément de fixation (120) comprend une structure de fixation (122) pour attacher le panneau intérieur (100) à une carrosserie de véhicule (1), **caractérisé en ce que** l'élément de fixation (120) et/ou l'élément de recouvrement (110) est un élément formé par compression, alors que l'élément de recouvrement (110) subit un plus grand degré de compression que l'élément de fixation (120).

2. Panneau intérieur (100) selon la revendication 1, **caractérisé en ce que** l'élément de fixation (120) et/ou l'élément de recouvrement (110) est un élément flexible.

3. Panneau intérieur (100) selon l'une quelconque des revendications précédentes, **caractérisé en ce qu'**il comprend des moyens de renforcement et des éléments absorption acoustiques et/ou d'énergie (110, 124).

4. Panneau intérieur (100) selon l'une quelconque des revendications précédentes, **caractérisé en ce que** l'élément de fixation (120) et l'élément de recouvrement (110) sont connectés par une charnière.

5. Panneau intérieur (100) selon l'une quelconque des revendications précédentes, **caractérisé en ce que** l'élément de fixation (120) et l'élément de recouvrement (110) sont constitués d'une seule pièce.

6. Panneau intérieur (100) selon l'une quelconque des revendications précédentes, **caractérisé en ce que** l'élément de fixation (120) et/ou l'élément de recouvrement (110) comporte(nt) un ou plusieurs onglet(s) (116) qui sont de préférence pré-chargés.

7. Panneau intérieur (100) selon l'une quelconque des revendications précédentes, **caractérisé en ce qu'**il est prévu au moins partiellement un espace entre l'élément de fixation (120) et l'élément de recouvrement (110).

8. Panneau intérieur (100) selon l'une quelconque des revendications précédentes, **caractérisé en ce que** sa partie supérieure (20) est connectée à une garniture de toit (50).

9. Panneau intérieur (100) selon l'une quelconque des revendications précédentes, **caractérisé en ce que** l'élément de recouvrement (110) se déforme sous la charge d'un airbag ou d'un élément de garniture intérieure voisin.

10. Panneau intérieur (100) selon l'une quelconque des revendications précédentes, **caractérisé en ce que** l'élément de recouvrement (110) s'étend au-dessus de l'élément de fixation (120).
